# EUROPEAN PATENT APPLICATION

(11) **EP 2 509 033 A1**
(43) Date of publication of application: **10.10.2012**
(21) Application number: 10834204.9
(22) Date of filing: 17.11.2010
(51) Int. Cl.: G06Q 10/00

(54) **REAL-TIME MONITORING, FEEDBACK, RECOGNITION AND CONSISTENCY IDENTIFICATION SYSTEM FOR PRODUCT QUALITY INFORMATION OF CONDOMS AND GLOVES AND METHOD THEREOF**

(30) Priority: 03.12.2009 CN 200910253400
(71) Applicant: Chen, Rulin, Guangdong 510800 (CN); Chan, Victor WJ, Taipo, NT, Hong Kong (CN)
(72) Inventor: Chen, Rulin, Guangdong 510800 (CN); Chan, Victor WJ, Taipo, NT, Hong Kong (CN)
(74) Representative: Davies, Philip
(86) International application number: PCT/CN2010/078843
(87) International publication number: WO 2011/066771

(57) **Abstract**

A real-time monitoring, feedback, recognition and consistency identification system for product quality information of condoms and gloves is disclosed. The system comprises: an acquisition module; a processing output module connected with the acquisition module; an exertion module connected with the processing output module; and an inquiry module. The system enables users to obtain the real-time manufacture acquisition data or the prior coding data or the preset information data from each product itself or its packaging and contrast with the each presupposed performance data index of the product. With such solution, the problem that quality judgments and tracing could not be objectively and directly carried out one by one as the product does not have real-time exerting independent information code and the product itself does not have corresponding association consistency information code with its corresponding packaging is resolved. Unqualified products being mixed with qualified products are avoided. Rights damage caused to users and regulatory difficulties caused to regulators because of the repackaging after removing the product packaging and the reselling are avoided. The sense of responsibility and self-discipline of manufacturers are improved. The regulators' and users abilities of distinguishing product quality are improved.

## Description

### TECHNICAL FIELD

The present invention pertains to the manufacturing and testing of products such as condoms, medical gloves and disposable examination gloves. It specifically discloses a real-time monitoring, feedback, recognition and consistency identification system for product quality information of condoms, medical gloves and disposable examination gloves.

### BACKGROUND

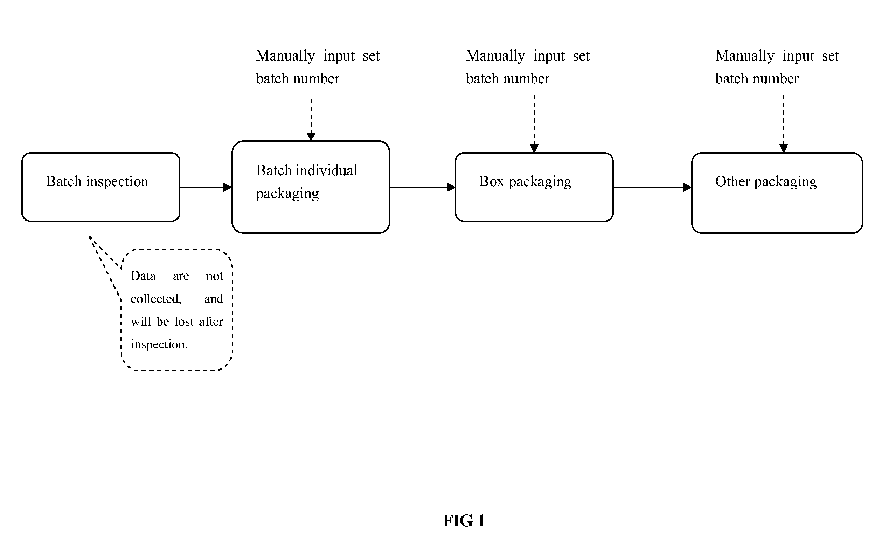

Figure 1 is a schematic diagram of the manufacturing and packaging process for condoms and gloves in prior art, and the existing manufacturing and packaging process for condoms and gloves has the following defects, specifically:
1. The first significant defect of existing production technology for condoms, medical gloves and disposable examination gloves is that the quality of an entire batch of products is represented by that of samples in declarations of product quality, which inevitably leads to the occurrence of sampling risk.
2. The second significant defect of existing production technology for condoms, medical gloves and disposable examination gloves is that the environmental status, equipment operational status and production process state that may affect product quality are not monitored, leading to the absence of a direct and objective basis for declaring product quality.
3. The third significant defect of existing production technology for condoms, medical gloves and disposable examination gloves is that only production batch numbers and production date information codes are marked on the packaging, while the information codes on all layers of packaging are applied separately and independently. Furthermore, the information codes on the packaging are not directly marked on the corresponding product; the prior art is manually operated with great arbitrariness and leaves large room for errors and intentional modifications, providing chances for unscrupulous manufacturers to partially or completely remove the original packaging and repackage the products for reselling so as to profit illegally. It may harm the rights and interests of users, and also cause regulatory difficulties for regulators.

Therefore, declarations of product quality in the prior art may be contrived or undisclosed; the product itself is not necessarily associated with its packaging, and they can be isolated and mutually independent.

### DESCRIPTION OF INVENTION

The present invention is to overcome the defects in prior art and provide a real-time monitoring, feedback, recognition and consistency identification system for product quality information of condoms and gloves. This system enables directly or indirectly, selectively and consistently marking of environmental data, equipment operation data, production process data or test result data or the prior coding or the preset information data on the product and its corresponding packaging (one or multiple layers) in real time or non-real time. Thus, each product itself and its corresponding packaging (one or multiple layers) all feature corresponding individual quality data, allowing the manufacturer to bear full responsibilities for the quality of each product. It prevents the sale of unqualified products on the market and the possibility of partially or completely removing the original packaging for repackaging the products for resale. It also offers an effective basis for regulators and users to objectively understand the quality of the product.

In order to achieve the foregoing technical objectives, the present invention provides the following technical solutions:
A real-time monitoring, feedback, recognition and consistency identification system for product quality information of condoms and gloves according to the present invention, comprising:
   An acquisition module which collects environmental data or equipment operation data or production process data or the test result data or the prior coding data or the preset information data in real time;
A data processing output module connected with said acquisition module, which processes and outputs the environmental data or equipment operation data or production process data or the test result data or the prior coding data or the preset information data collected by the acquisition module in real time;
An exertion module connected with said data processing output module, which consistently marks the environmental data or equipment operation data or production process data or the test result data or the prior coding data or the preset information data that processed and outputted by the data processing output module on the product and its corresponding one or multiple layers of packaging via linkage transmission or data transmission, i.e. the product and its corresponding one or multiple layers of packaging can be selectively and consistently labeled, directly or indirectly, with environmental data or equipment operation data or production process data or the test result data or the prior coding data or the preset information data;

An inquiry module, which enables users to directly obtain environmental data or equipment operation data or production process data or the test result data or the prior coding data or the preset information data, and contrast with the performance data index of the product preset in the inquiry module.

Specifically, said acquisition module of the present invention is used to collect environmental data or equipment operation data or production process data or test result data or the prior coding data or the preset information data.

The collection apparatus used in said acquisition module of the present invention is a physical collection apparatus or a chemical collection apparatus.

In addition, said exertion module of the present invention comprises data identification apparatus that can selectively and consistently label all data, directly or indirectly, on the product and its corresponding one or multiple layers of packaging.

The said environmental data in the present invention comprises all data that may affect equipments or products at the production site; the said equipment operation data comprises all equipment testing or monitoring data; the said production process data comprise data from product and production process testing; and the said inspection result data comprises results of all product inspections.

Said inquiry module uses Internet, telephone or text message as inquiring platform.

The said condom and glove products of the present invention comprise condoms, medical gloves or disposable examination gloves.

A real-time monitoring, feedback, recognition and consistency identification method for product quality information of condoms and gloves according to the present invention comprises specific steps as follows:
(1) The acquisition module collects environmental data or equipment operation data or production process data or the test result data or the prior coding data or the preset information data;
(2) The data processing module processes and outputs the environmental data or equipment operation data or production process data or the test result data or the prior coding data or the preset information data which are collected by the acquisition module in real time;
(3) The exertion module selectively and consistently marks, directly or indirectly, the processed and outputted environmental data or equipment operation data or production process data or the test result data or the prior coding data or the preset information data on the product and its corresponding one or multiple layers of packaging in real time;
(4) The inquiry module enables regulators or users to obtain product quality information and status data during production via Internet, telephone or text message, and contrast with product performance data index preset in the inquiry module.

Compared to prior art, the beneficial effects of the present invention are:
(1) The present invention collects and processes the environmental status of production for condoms, medical gloves and disposable examination gloves in real time or non-real time, providing a basis for determining whether the environment of the production process meets requirements for production equipment and product quality control.
(2) The present invention collects and processes the equipment operation data in real time or non-real time, providing a basis for determining whether equipment operations during the production process meet requirements for product quality control.
(3) The present invention collects and processes the production process data in real time or non-real time, providing a basis for determining whether the production process meets requirements for product quality control.
(4) The present invention collects not only environmental data or equipment operation data or production process data, but also the prior coding data or the preset information data. Data come from a wide range of sources and are applicable under any circumstances.
(5) The present invention collects and processes the test result data in real time or non-real time, providing a basis for determining whether the inspection results meet requirements for product quality standards.
(6) The present invention allows the product and its corresponding one or multiple layers of packaging to have individual quality data with direct association and consistency, resolving confusion and mismatches between the product and its corresponding one or multiple layers of packaging.
(7) The present invention allows each product to feature its individual quality data, avoiding the sampling risk where the quality of the entire batch of products is represented by that of samples, meanwhile preventing intentional alteration of quality data.
(8) The present invention allows users and regulators to directly obtain real-time quality monitoring data for individual products by accessing the inquiry platform without the need to remove packaging.
(9) The present invention provides an original basis for users to understand and be aware of product quality conditions.
(10) The present invention provides an original basis for regulators to trace product quality.
(11) The present invention can enhance manufacturers' commitment, awareness, responsibility with regard to quality, and prevent unscrupulous manufacturers from partially or completely removing the original packaging to repackage the products for reselling so as to profit illegally.
(12) The present invention can prevent unscrupulous manufacturers from mixing unqualified products with qualified products, so as to obtain opportunities to pass sampling tests.

### BRIEF DESCRIPTION OF THE DRAWINGS

The following is a detailed description of the present invention in conjunction with the attached figures and the specific embodiments.
Figure 1 is a schematic diagram of the manufacturing and packaging process for condoms and gloves in prior art;
Figure 2 is a schematic diagram of said system according to the present invention;
Figure 3 is a diagram of the first embodiment of the present invention;
Figure 4 is a diagram of the second embodiment of the present invention;
Figure 5 is a diagram of the third embodiment of the present invention;
Figure 6 is a diagram of the fourth embodiment of the present invention;
Figure 7 is a diagram of the fifth embodiment of the present invention;
Figure 8 is a diagram of the sixth embodiment of the present invention;
Figure 9 is a theoretical diagram of operation procedures for the sixth embodiment of the present invention;
Figure 10 is a diagram of the seventh embodiment of the present invention.
Figure 11 is a diagram of the eighth embodiment of the present invention.
Figure 12 is a diagram of the ninth embodiment of the present invention.

### Specific Embodiments

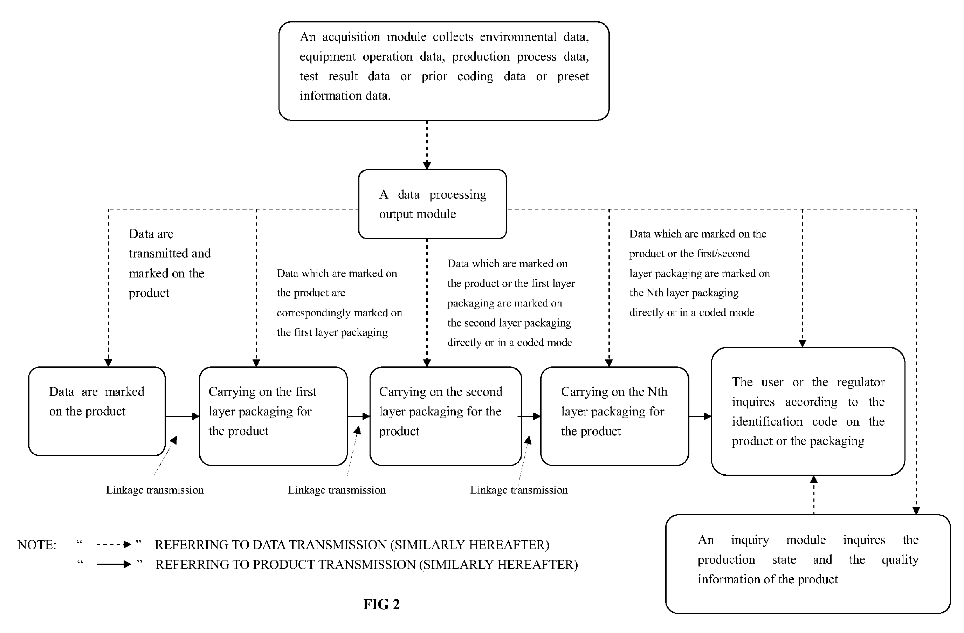

As shown in Figure 2, the real-time monitoring, feedback, recognition and consistency identification system for product quality information of condoms and gloves of the present invention comprises an acquisition module, which collects environmental data or equipment operation data or production process data or the test result data or the prior coding data or the preset information data in real time;
A data processing output module connected with said acquisition module, which processes and outputs the environmental data or equipment operation data or production process data or the test result data or the prior coding data or the preset information data collected by the acquisition module in real time;
The exertion module connected with said data processing output module, which consistently marks the environmental data or equipment operation data or production process data or the test result data or the prior coding data or the preset information data that are processed and outputted by the data processing output module via linkage transmission and data transmission on the product and its corresponding one or multiple layers of packaging, i.e. the product and its corresponding one or multiple layers of packaging can be selectively and consistently labeled, directly or indirectly, with the environmental data or equipment operation data or production process data or the test result data or the prior coding data or the preset information data;

An inquiry module allows users to directly obtain the environmental data or equipment operation data or production process data and the test result data or the prior coding data or the preset information data, and contrast with product performance data index preset in the inquiry module.

As a further improvement to the foregoing technologies, said acquisition module of the present invention is used to collect the environmental data, equipment operation data, production process data and the test result data.

As a further improvement to the foregoing technologies, said data output system comprises data output identification apparatus and data storage management apparatus.

The said environmental data in the present invention comprise all data that affects equipments or products at the production site; the said equipment operation data comprise all equipment testing and monitoring data; the said production process data comprises data from production process testing of the product; and the said test result data comprises results of all product inspections.

Furthermore, said inquiry module of the present invention uses Internet, telephone or text message as inquiry platform.

The following examples will correspond to the specific description of different products, nevertheless without being limited thereto.

### The First Embodiment:

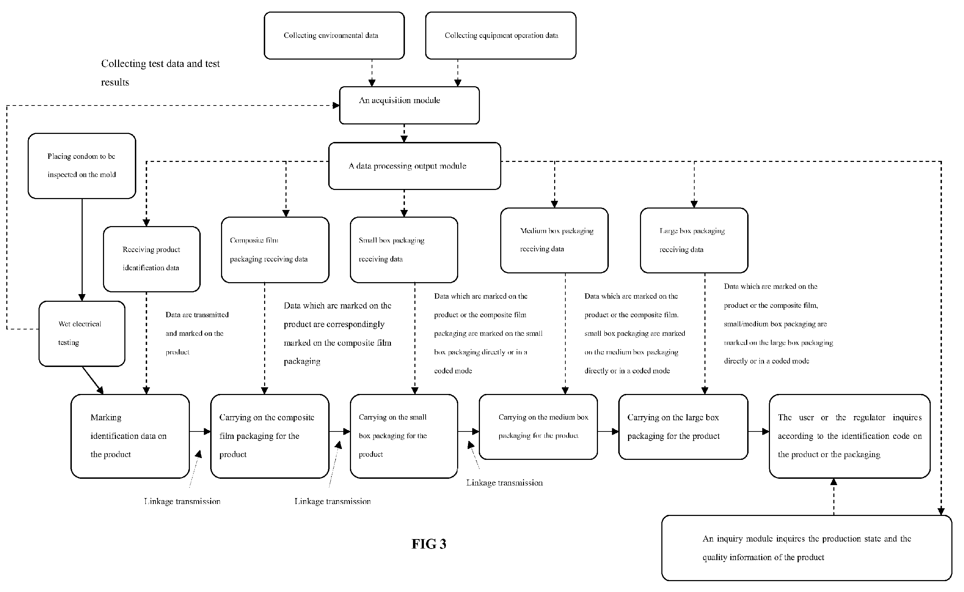

As shown in Figure 3, on the base of current applications for condom wet electrical testing equipment and packaging equipment, this embodiment adds an acquisition module, a processing module, a data output module, devices for receiving and applying data to product and product packaging layers, linkage transmission device, data transmission device, and an inquiry module. The specific procedures are as follows:
(1) Place the bare condom product for inspection on the mold;
(2) Testing;
(3) Product drying;
(4) The acquisition module collects the environmental data, or equipment operation data, or production process data or test result data in real time during product testing;
(5) The data output module outputs the data to the product data receiving and applying devices for the product and its each layer of packaging correspondingly, as well as the dried bare condom that pass the inspection;
(6)After the electrical test, the tested bare condom is transferred to a single packaging apparatus for the first layer packaging (for example, composite film packaging) thru the linkage transmission and the data transmission of the exertion module. The data for the first layer of product packaging (composite film packaging) is received, and the data marked on the product are correspondingly presented on the first layer packaging (composite film);
(7) The first layer packaging is sequentially transmitted to the second layer packaging (small box packaging) by the linkage transmission; the data for the second layer packaging is received, and the data labeled on the product or the first layer packaging are directly or indirectly marked correspondingly on the second layer packaging; then the same labels continue to be marked correspondingly on the third layer packaging (medium box packaging) and the fourth layer packaging (large box packaging).

### The Second Embodiment:

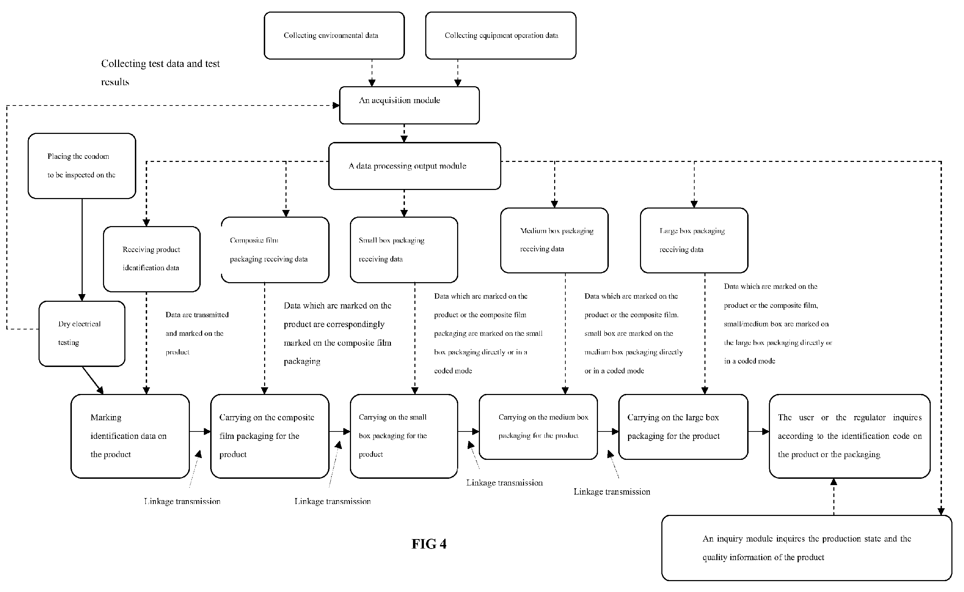

This example describes the testing, packaging and labeling based on dry electrical testing method for condoms. As shown in Figure 4, on the base of current applications for condom dry electrical testing equipment and packaging equipment, this embodiment adds a data output module, linkage transmission device and data transmission device. The specific procedures are essentially the same as in the first embodiment, except the product drying in step (2) of the first embodiment is omitted because the dry electrical testing method is used. The same steps will not be discussed here.

### The Third Embodiment:

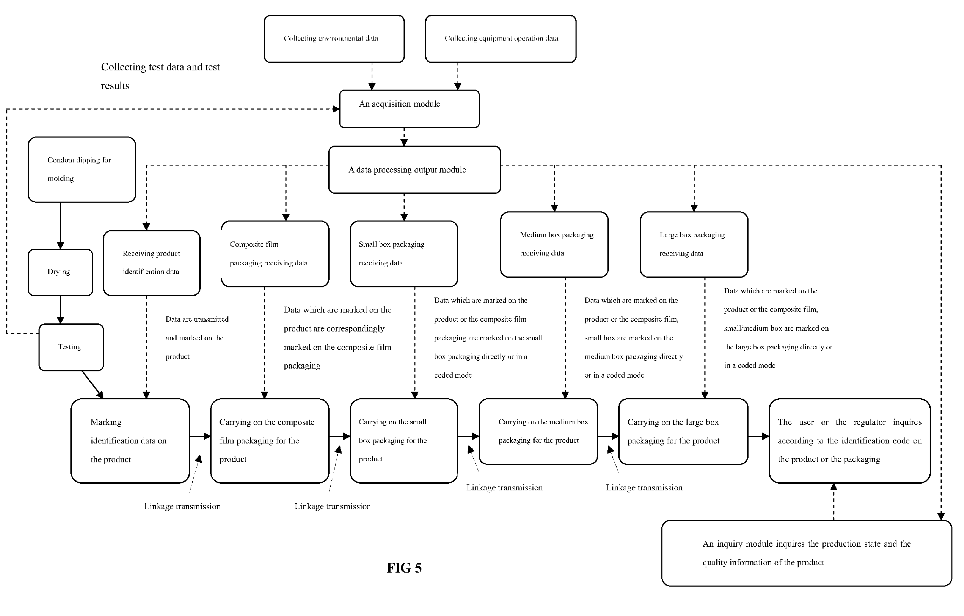

As shown in Figure 5, on the base of an integrated condom dipping production and inspection equipment, this embodiment integrates packaging equipment, and adds an acquisition module, a data processing output module, linkage transmission, data transmission and an inquiry module. The specific procedures are as follows:
(1) Dipping for molding;
(2) Drying;
(3) Testing;
(4) Product drying (this step is omitted if dry electrical test is used);
(5) The acquisition module collects the environmental data or equipment operation data or production process data or test result data in real time during product testing;
(6) The data output module accordingly outputs the data to the product data receiving module and the product packaging layers data receiving and applying modules during the condom testing process, and to the dried bare condom that pass the inspection;
(7) After the electrical test, the tested bare condom is transferred to a single packaging apparatus for the first layer packaging (composite film packaging) by the linkage transmission and the data transmission of the exertion module. The data of the first layer packaging is received and data for the product are correspondingly presented on the first layer packaging;
(8) The first layer packaging is sequentially transmitted to the second layer packaging (small box packaging) by the linkage transmission; the data for the second layer packaging is received and data marked on the product and first layer of packaging are directly or indirectly marked correspondingly on the second layer packaging; then the same labels continue to be marked correspondingly on the third layer packaging (medium box packaging) and the fourth layer packaging (large box packaging).

### The Fourth Embodiment:

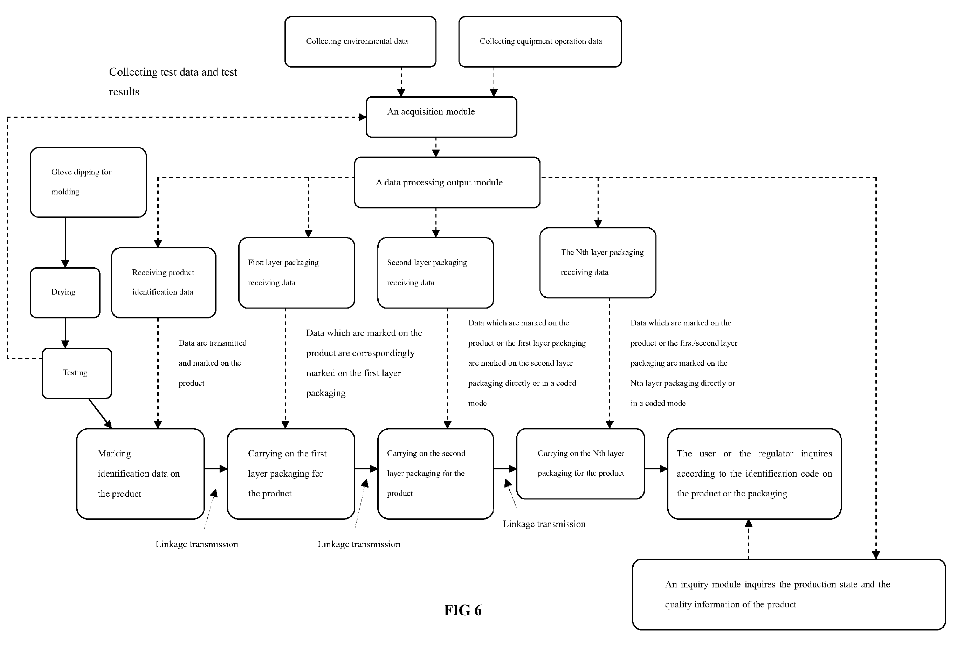

As shown in Figure 6, on the base of the generally used integrated production and inspection system for medical gloves and disposable examination gloves, this embodiment integrates packaging equipment, and adds an acquisition module, a data processing output module, linkage transmission device, data transmission device and an inquiry module. The specific procedures are as follows:
(1) Dipping for molding;
(2) Drying;
(3) Testing;
(4) Product drying;
(5) The acquisition module collects the environmental data or equipment operation data or production process data or inspection result data during product testing in real time;
(6) The data output module outputs the data to the product data receiving module and product packaging layers data receiving and applying modules correspondingly during the testing process for medical gloves and disposable examination gloves, and to the dried bare medical gloves and disposable examination gloves that pass the inspection;
(7) After the electrical test, the medical gloves and disposable examination gloves tested will be transferred to a single packaging apparatus for the first layer packaging by the linkage transmission and data transmission of the exertion module, The data for the first layer packaging is received and data for the product are correspondingly presented on the first layer of product packaging;
(8) The first layer packaging is sequentially transmitted to the second layer packaging by linkage transmission; the data for the second layer packaging is received and data marked on the product or first layer packaging are directly or indirectly marked correspondingly on the second layer packaging; then the same labels continue to be marked correspondingly on the third layer packaging.

### The Fifth Embodiment:

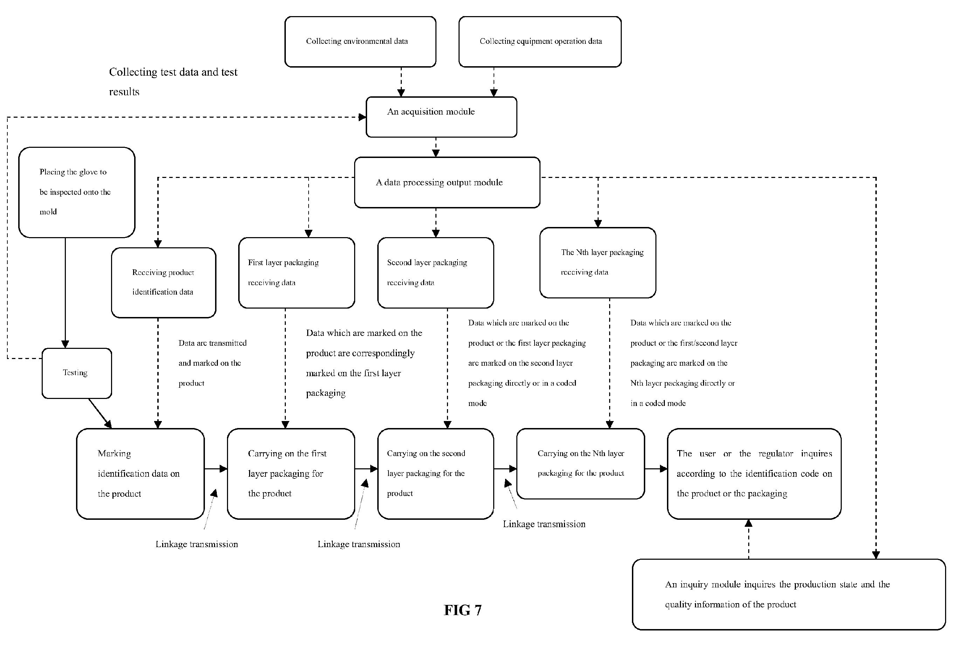

As shown in Figure 7, on the base of currently accepted inspection equipment and packaging equipment for medical gloves and disposable examination gloves, this embodiment adds an acquisition module, a data processing output module, linkage transmission device, data transmission device and an inquiry module. The specific procedures are as follows:
(1) Place the product to be inspected onto the mold;
(2) Testing;
(3) Product drying;
(4) The data acquisition module collects the environmental data or equipment operation data or production process data or test result data in real time during product testing;
(5) The data output module outputs the data to the product data receiving module and product packaging layers data receiving and applying modules correspondingly during the testing process for medical gloves and disposable examination gloves, and to the dried medical gloves and bare disposable examination gloves that pass the inspection;
(6) After the electrical test, the medical gloves and bare disposable examination gloves tested will be transferred to a single packaging apparatus for the first layer of product packaging by the linkage transmission device and data transmission device of the exertion module, The data of the first layer packaging is received and data marked on the product are correspondingly marked on the first layer packaging;
(7) The first layer packaging is sequentially transmitted to the second layer of product packaging by linkage transmission; the data for the second layer of product packaging is received and data marked on the product or first layer packaging are directly or indirectly marked on the second layer packaging correspondingly; then the same labels continue to be marked correspondingly on the third layer packaging.

### The Sixth Embodiment:

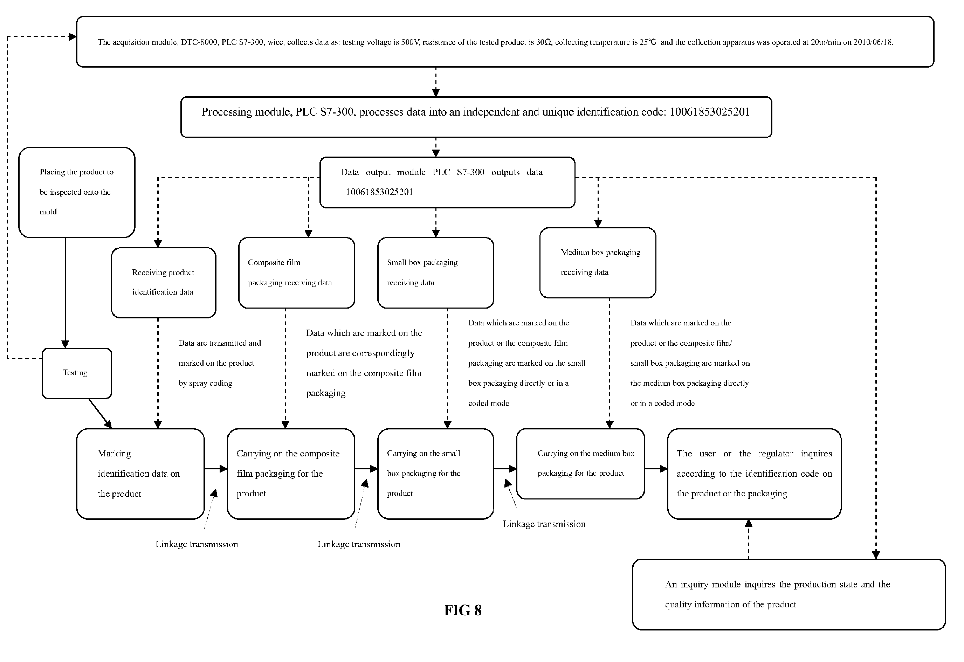

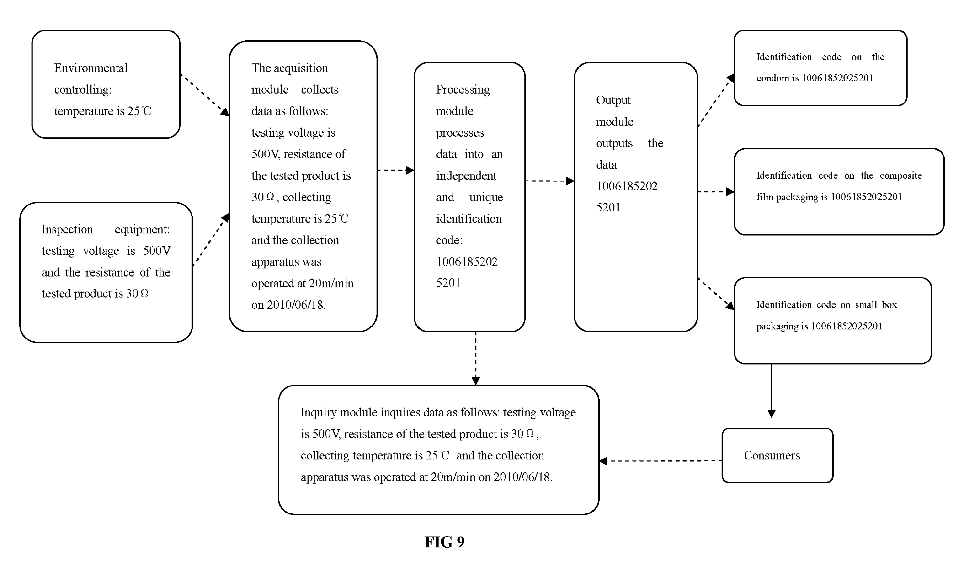

As shown in Figure 8 and 9, on the base of currently accepted condom wet electrical testing equipment, this embodiment adds a collection module, a data processing output module, linkage transmission device, data transmission device and an inquiry module. The specific procedures are as follows:
(1) Place the product to be inspected onto the mold;
(2) The production data are collected by the collection module DTC-8000, PLC S7-300 and wicc, the testing voltage used during collection is 500V and the resistance of the tested product is 30Ω;
(3) The environmental data is collected by the acquisition module DTC-8000, PLC S7-300 and wicc. The collecting temperature is 25°C. The collection apparatus of the acquisition module for the equipment operation data acquisition was operated at 20 m/min on June 18, 2010;
(4) The processing module PLC S7-300 processed the acquisition data into a unique identification code: 10061853025201;
(5) Product drying;
(6) The data output module PLC S7-300 marks the output data on the product, single packaging and the consumption packaging in the form of spray coding. And the data are transmitted to the inquiry module controlled by wince;

With the above steps, the entire process of testing products on wet electrical testing equipment, controlling and information output, as well as product sorting test, is completed.

### The Seventh Embodiment:

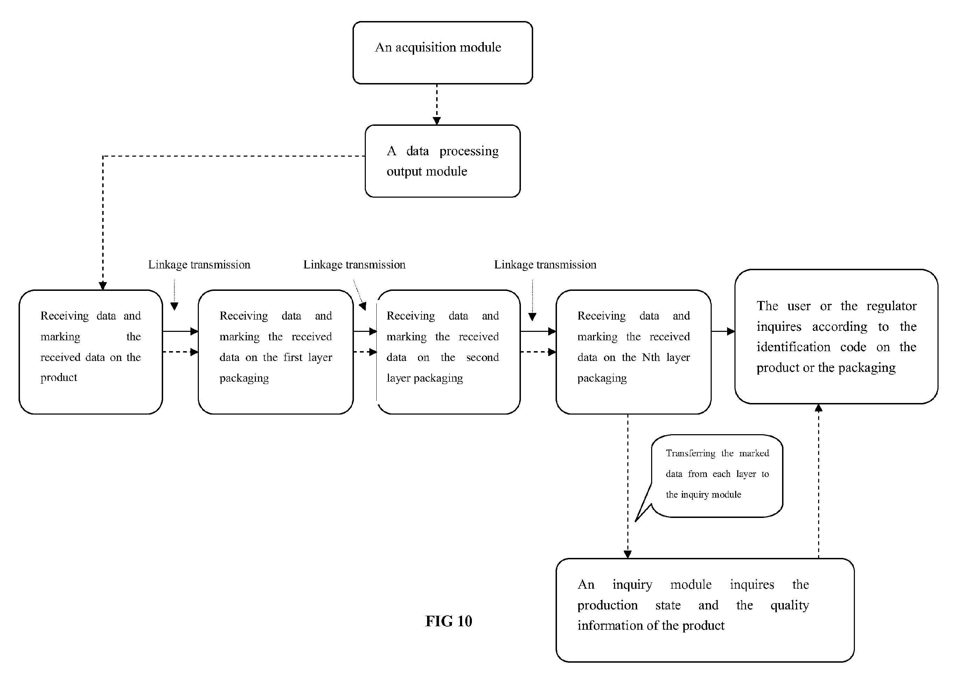

As shown in Figure 10, on the base of currently accepted testing equipment, this embodiment adds an acquisition module, a processing module, a data processing output module, linkage transmission device and an inquiry module. The specific procedures are as follows:
(1) The acquisition system collects, in real time, the environmental data or equipment operation data or production process data or test result data during product testing;
(2) The data are transmitted to the product by data processing output module;
(3) Data marked on the product are transmitted to the first layer of packaging by linkage transmission and data transmission;
(4) Data marked on the first layer packaging are directly or indirectly transmitted to the second layer packaging by linkage transmission and data transmission;
(5) Data marked on the second layer packaging are directly or indirectly transmitted to the third layer packaging by linkage transmission and data transmission;
(6) Data marked on the third layer packaging are directly or indirectly marked on the Nth layer of packaging by linkage transmission device and data transmission device,;
(7) Users make inquiries via the Internet, telephone, or text messages with the inquiry device.

### The Eighth Embodiment:

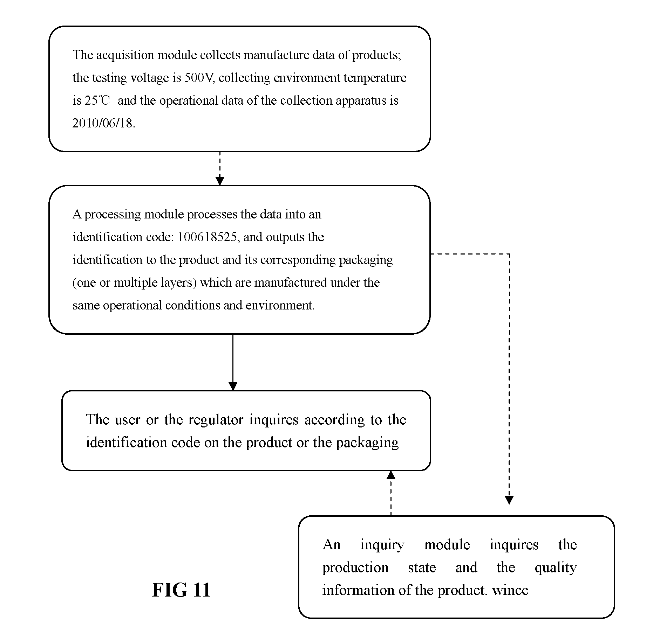

As shown in Figure 11, on the base of currently accepted condom wet electrical testing equipment, this embodiment adds an acquisition module, a data processing output module, linkage transmission device, data transmission device and an inquiry module. The collected data are similar to a certain extent. The specific procedures are as follows:
(1) Place the product to be inspected onto the mold;
(2) The product production data are collected by the acquisition module and the testing voltage during collection is 500V;
(3) The environmental data is collected by the acquisition module and the collecting temperature is 25°C; the collection apparatus of the acquisition module for the equipment operation data acquisition was operated on June 18, 2010;
(4) The collected data processed by the processing module as: 100618525;
(5) Product drying;
(6) The data output module marks the output data "100618525" onto the product, single packaging and consumption packaging that are produced on that day under the same operational conditions and environment, and transmits data to the inquiry module;

With the above steps, the entire process of testing products on wet electrical equipment, controlling and information output, as well as product sorting test, is completed.

### The Ninth Embodiment:

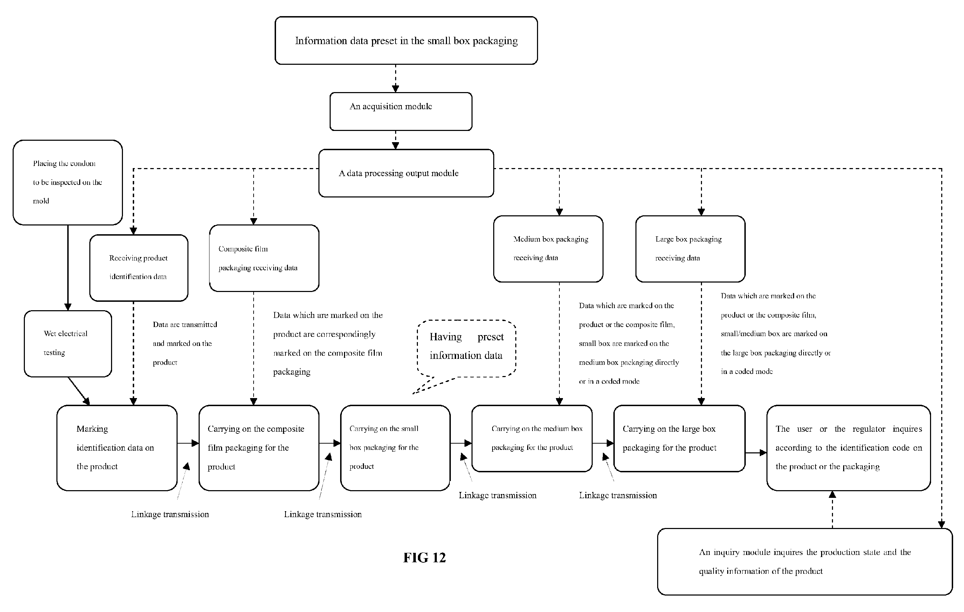

As shown in Figure 12, on the base of currently accepted condom wet electrical testing equipment, this embodiment adds an acquisition module, a data processing output module, linkage transmission device, data transmission device, an inquiry module and the device receiving and applying data of product and its packaging layers. The collected data are similar to a certain extent. The specific procedures are as follows:
(1)Place the product to be inspected onto the module;
(2)Perform inspection;
(3)Dry the product;
(4)Data acquisition module performs real-time acquisition of the information data preset on small box packaging;
(5)Data output module outputs the data accordingly to the product data receiving and applying devices in the condom testing process, and the product layers packaging data receiving and applying devices, and to the dried bare condom that pass the inspection.
(6)The bare condom that has passed electrical test is transferred thru the linkage transmission device and data transmission device of the exertion module to a single packaging apparatus for the first layer packaging (for example, the composite file packaging). The data for the first layer packaging (composite film packaging) is received and data marked on the product are correspondingly presented on the first layer packaging (composite film packaging).
(7)The first layer packaging are transmitted thru the linkage transmission device sequentially to the second layer packaging (small box packaging), where the data is preset accordingly to the data marked on the product; and then the same label continue to be marked correspondingly on the third layer packaging (medium box packaging) and the fourth layer packaging (large box packaging) as it should be.

The present invention is not limited to the aforementioned embodiments, and the present invention also includes changes or variations that do not deviate from the spirit and scope thereof, or if the said changes or variations are within the range of claims and same scope of technology thereof.

## Claims

1. A real-time monitoring, feedback, recognition and consistency identification system for product quality information of condoms and gloves, wherein the system comprises:
an acquisition module which collects environmental data, equipment operation data, production process data or test result data or the prior coding data or the preset information data in real time or non-real time;
a processing output module connected with said acquisition module, which processes and outputs the environmental data, equipment operation data or production process data or test result data or the prior coding data or the preset information data collected by the acquisition module in real time;
an exertion module connected with said processing output module, which consistently marks the processed and outputted environmental data, equipment operation data or production process data or test result data or the prior coding data or the preset information data on the product and its corresponding one or multiple layers of packaging via linkage transmission and data transmission, i.e. the product and its corresponding one or multiple layers of packaging can be selectively labeled, directly or indirectly with the environmental data, equipment operation data or production process data and test result data or the prior coding data or the preset information data; and
an inquiry module, which enables regulators or users to directly obtain environmental data or equipment operation data or production process data and test result data or the prior coding data or the preset information data of a single product from the product itself or its corresponding layers of packaging or contrast with the each product performance index of a single product or batch products.

2. A real-time monitoring, feedback, recognition and consistency identification system for product quality information of condoms and gloves according to Claim 1, wherein said acquisition module collects environmental data, equipment operation data, production process data or test result data or the prior coding data or the preset information data in real time or non-real time.

3. A real-time monitoring, feedback, recognition and consistency identification system for product quality information of condoms and gloves according to Claim 2, wherein said processing output module comprises a data processing system and an output system.

4. A real-time monitoring, feedback, recognition and consistency identification system for product quality information of condoms and gloves according to any one of Claims 1 to 3, wherein the collection apparatus used in the acquisition module is a physical collection apparatus or a chemical collection apparatus.

5. A real-time monitoring, feedback, recognition and consistency identification system for product quality information for condoms and gloves according to Claim 4, wherein the said exertion module comprises a data labeling apparatus that can selectively and consistently mark all data, directly or indirectly, on each product itself and its corresponding one or multiple layers of packaging.

6. A real-time monitoring, feedback, recognition and consistency identification system for product quality information of condoms and gloves according to Claim 1, wherein said environmental data comprises all data influencing equipments or products at the production site; said equipment operational data comprises all testing and monitoring data of equipments; said production process data comprises testing data collected in the process of production; and said inspection result data comprises result data for product inspections.

7. A real-time monitoring, feedback, recognition and consistency identification system for product quality information of condoms and gloves according to Claim 1, wherein said inquiry module uses Internet, telephone or text messages as inquiry platform.

8. A real-time monitoring, feedback, recognition and consistency identification system for product quality information of condoms and gloves according to Claim 1, wherein said condom and glove products of the present invention comprise condoms, medical gloves or disposable examination gloves.

9. A real-time monitoring, feedback, recognition and consistency identification method for product quality information of condoms and gloves according to Claim 1, wherein the said method has specific steps as follows
(1) the acquisition module collects the environmental data or equipment operation data or production process data or the test result data or the prior coding data and the preset information data in real time or non-real time;
(2) the processing output module processes and outputs the environmental data or equipment operation data or production process data or the test result data or the prior coding data or the preset information data in real time or non-real-time;
(3) the processed and outputted environmental data, equipment operation data or production process data or the test result data or the prior coding data or the preset information data is selectively and consistently marked by the exertion module, directly or indirectly , on the product and its corresponding one or multiple layers of packaging in real time or non-real time;
(4) the inquiry module enables regulators or users to obtain product quality information and production state data or the prior coding data or the preset information via Internet, telephone or text messages, or contrast with the each performance data index preset in the inquiry module.
